# EUROPÄISCHE PATENTANMELDUNG

(11) **EP 1 598 918 A1**
(43) Veröffentlichungstag der Anmeldung: **23.11.2005**
(21) Anmeldenummer: 04011645.1
(22) Anmeldetag: 17.05.2004
(51) Int. Cl.: H02K 1/14

(54) **Blechpaket aus Segmenten**

(71) Anmelder: GRUNDFOS A/S, DK-8850 Bjerringbro (DK)
(72) Erfinder: Bach Andersen, Niels Christian, 8850 Bjerringbro (DK); Lundsted Poulsen, Brian, 8850 Bjerringbro (DK); Blad, Thomas, 8850 Bjerringbro (DK); Hellegaard, Kjeld, 8850 Bjerringbro (DK)
(74) Vertreter: Hemmer, Arnd

(57) **Zusammenfassung**

Die Erfindung betrifft ein Blechpaket für Elektromotoren mit zumindest zwei Segmenten (2), von denen zumindest eines an einer Seitenkante (11) eine Eingriffsnut (12) und das andere an einer gegenüberliegenden Seitenkante (9) einen korrespondierenden Eingriffsvorsprung (10) aufweist, über welche die beiden Segmente (2) zu einem Bauteil miteinander verbunden sind, wobei die Eingriffsnut (12) eine Hinterschneidung in Form eines von der Nutöffnung beabstandeten erweiterten Abschnittes (26) aufweist und der Eingriffsvorsprung (10) und die Eingriffsnut (12) derart dimensioniert sind, dass durch Einsetzen des Eingriffsvorsprunges (10) in die Eingriffsnut (12) der Eingriffsvorsprung (10) und/oder die Eingriffsnut (12) plastisch verformt werden und ineinander eingreifen, sowie Verfahren zur Herstellung eines solchen Blechpaketes.

## Beschreibung

Die Erfindung betrifft ein Blechpaket für elektromagnetische Anwendungen sowie ein Verfahren zur Herstellung eines solchen Blechpaketes. Blechpakete für elektromagnetische Anwendungen werden beispielsweise als Eisenkerne oder Eisenkreise in elektromagnetischen Maschinen und Anlagen eingesetzt. Dies können beispielsweise Blechpakete in Transformatoren oder Statoren von Elektromotoren sein.

Insbesondere bei kleinen Elektromotoren, welche in großen Stückzahlen gefertigt werden und beispielsweise als Antriebsmotoren von Pumpenaggregaten, insbesondere von Umwälzpumpen für Heizungsanlagen eingesetzt werden, ist eine kostengünstige Fertigung und Montage sämtlicher Bauteile erwünscht. Dies beinhaltet auch eine kostengünstige Herstellung des Stators.

Um in elektromagnetischen Einrichtungen insbesondere in Elektromotoren Wicklungen für Spulen auf die Blechpakete leichter aufbringen zu können, werden diese aus Segmenten gefertigt. Auf die einzelnen Segmente werden zunächst die Spulen aufgebracht. Anschließend werden die Segmente in ihrer endgültigen Position fest miteinander verbunden. Hierzu ist beispielsweise aus US 5,786,651 sowie US 6,219,900 B1 bekannt, einzelne Statorsegmente mit Hilfe von Steckverbindungen miteinander zu verbinden. Dazu ist jeweils an einer Seite eines Statorsegmentes eine Nut und an der entgegengesetzten Seite ein korrespondierender Vorsprung ausgebildet, welcher in die Nut des angrenzenden Segmentes eingreift. Dabei wird eine Rastverbindung zwischen Vorsprüngen und Nut bzw. eine kraftschlüssige Verbindung zwischen Vorsprung und Nut gebildet, welche aufgrund der elastischen Rückstellkräfte der Nutwandungen zusammen gehalten wird. Diese Anordnung hat den Nachteil, dass die Nuten und Vorsprünge mit großer Präzision gefertigt werden müssen, um die für die Passung erforderlichen Toleranzen einzuhalten. Insbesondere bei großen Stückzahlen sind die erforderlichen Toleranzen beispielsweise aufgrund des Werkzeugverschleißes nur schwer einzuhalten.

Es ist daher Aufgabe der Erfindung, ein Blechpaket für elektromagnetische Anwendungen sowie ein korrespondierendes Verfahren zur Herstellung eines solchen Blechpakets zu schaffen, welche eine zuverlässige Verbindung zwischen einzelnen Segmenten des Blechpaketes sicherstellen und kostengünstig herzustellen sind.

Diese Aufgabe wird durch ein Blechpaket für elektromagnetische Anwendungen mit den im Anspruch 1 angegebenen Merkmalen sowie durch ein Verfahren zur Herstellung eines Blechpaketes mit den im Anspruch 14 angegebenen Merkmalen gelöst. Bevorzugte Ausführungsformen ergeben sich aus den zugehörigen Unteransprüchen.

Das erfindungsgemäße Blechpaket für elektromagnetische Anwendungen weist zumindest zwei Segmente auf, von denen zumindest eines an einer Seitenkante eine Eingriffsnut und das andere an einer gegenüberliegenden Seitenkante einen korrespondierenden Eingriffsvorsprung aufweist. Über die Eingriffsnut und den Eingriffsvorsprung können die beiden Segmente zu einem Bauteil verbunden werden. Ferner kann an jedem Segment eine Eingriffsnut und an der entgegengesetzten Seite ein Eingriffsvorsprung ausgebildet sein, sodass die einzelnen Segmente jeweils mit zwei angrenzenden Segmenten verbunden werden können. Alternativ können auch mehrere Segmente auf andere Weise miteinander verbunden sein, sodass nur einzelne Segmente in der beschriebenen Weise miteinander verbunden werden.

Erfindungsgemäß weist die Eingriffsnut eine Hinterschneidung in Form eines von der Nutöffnung beabstandeten erweiterten Abschnittes auf, das heißt die Nut ist beabstandet vom Nutgrund verengt bzw. in der Nähe des Nutgrundes verbreitert ausgebildet. Der Eingriffsvorsprung und die Eingriffsnut sind ferner derart aufeinander abgestimmt dimensioniert, dass durch Einsetzen des Eingriffsvorsprunges in die Eingriffsnut der Eingriffsvorsprung und/oder die Eingriffsnut plastisch verformt werden. Durch die plastische Verformung fließt Material des Eingriffsvorsprunges in den erweiterten Bereich der Nut, sodass der verengte Bereich der Nut bzw. die Hinterschneidung hintergriffen wird und somit eine formschlüssige Verbindung der beiden Segmente erreicht wird. Zusätzlich kann der Eingriffsvorsprung eine Einschnürung beabstandet von der Stirnkante des Eingriffsvorsprunges aufweisen, sodass auch der Eingriffsvorsprung eine Hinterschneidung aufweist. So kann auch Material der Eingriffsnut in den Bereich der Einschnürung des Eingriffsvorsprunges fließen und eine formschlüssige Verbindung herstellen.

Dadurch, dass Nut und Eingriffsvorsprung so dimensioniert sind, dass es beim Einsetzen zu einer plastischen Verformung kommt, kann immer eine ausreichend feste Verbindung zwischen den zwei Segmenten des Blechpaketes sichergestellt werden. Dabei müssen weniger enge Toleranzen eingehalten werden, als wenn eine rein kraftschlüssige Verbindung bedingt durch elastische Rückstellkräfte der Eingriffsnut hergestellt wird. Durch die Dimensionierung von Eingriffsvorsprung und Hinterschneidung, welche zu einer plastischen Verformung des Materials führen, wird erreicht, dass sich beim Zusammenfügen das Material zunächst plastisch verformt, so dass eine vorgegebene Toleranz zwischen Eingriffsvorsprung und Eingriffsnut bzw. Hinterschneidung erzeugt wird. Durch die plastische Verformung erfolgt somit zunächst eine Kalibrierung des Übermaßes zwischen Eingriffsvorsprung und Eingriffsnut.

Um die plastische Verformung beim Ineinandersetzen von Eingriffsvorsprung und Eingriffsnut zu erreichen, ist ein größeres Übermaß zwischen Eingriffsnut und Eingriffsvorsprung vorgesehen, d. h. die Eingriffsnut ist zumindest in Abschnitten vorzugsweise kleiner als der aufzunehmende Eingriffsvorsprung ausgebildet. Dadurch werden beim Einsetzen des Eingriffsvorsprunges, zumindest in Bereichen der Anlagefläche, hohe Flächenpressungen zwischen der Eingriffsnut und dem Eingriffsvorsprung erzeugt. Diese führen wiederum zu so hohen Spannungen insbesondere im Material des Eingriffsvorsprunges, dass die Spannungen die Fließgrenze des Materials übersteigen und so zu einer plastischen Verformung des Materials führen.

Bevorzugt ist das Blechpaket als Stator für einen Elektromotor, vorzugsweise für ein Pumpenaggregat ausgebildet, wobei der Stator zumindest zwei Segmente, das heißt Statorsegmente aufweist, von denen eines an einer Seitenkante die Eingriffsnut und das andere an einer gegenüberliegenden Seitenkante den korrespondierenden Eingriffsvorsprung aufweist. Auf diese Weise können Statoren für Elektromotoren, insbesondere für Pumpenaggregate wie beispielsweise für Heizungsumwälzpumpen in großen Stückzahlen sehr kostengünstig gefertigt werden. Die in bekannter Weise aus einzelnen Blechen zusammengesetzten Statorsegmente werden zunächst mit den erforderlichen Statorwicklungen versehen und dann über die Eingriffsnut und den Eingriffsvorsprung zu einem ringförmigen Stator zusammengesetzt. Dazu kann jedes Statorsegment an einer in Umfangsrichtung gerichteten Stirnseite einer Eingriffsnut und an der entgegengesetzten Stirnseite einen Eingriffsvorsprung aufweisen. Alternativ können einzelne Statorsegmente zuvor durch andere Verbindungsarten beweglich zu einer Kette verbunden sein, wobei das Statorsegment am ersten Ende der Kette an seiner freien Stirnkante eine Eingriffsnut und das Statorsegment am zweiten Ende der Kette an seiner freien Stirnkante einen korrespondierenden Eingriffsvorsprung aufweist. Durch Ineinandersetzten der Eingriffsnut und des Eingriffsvorsprunges kann die Kette dann zu einem ringförmigen Stator geschlossen werden. Die Verbindung der einzelnen Statorsegmente zu einer Kette kann beispielsweise durch schmale Blechstege erfolgen.

Insbesondere eignet sich ein erfindungsgemäß ausgebildeter Stator zum Einsatz in einem nasslaufenden Spaltrohrmotor, wie er beispielsweise in Heizungsumwälzpumpen im Leistungsbereich von 10 bis 300 Watt eingesetzt wird. Bei Spaltrohrmotoren ist der Rotor im Spaltrohr gelagert. Aus diesem Grund muss das Statorgehäuse nur geringe Kräfte aufnehmen und kann vergleichsweise leicht ausgebildet werden. Durch die erfindungsgemäße feste Verbindung der einzelnen Statorsegmente untereinander wird dies weiter begünstigt, da so ein segmentierter, jedoch eigenstabiler Stator geschaffen wird, welcher nicht durch ein umgebendes Statorgehäuse zusammengehalten werden muss.

Weiter bevorzugt weist der Eingriffsvorsprung einen Abschnitt auf, welcher in den erweiterten Abschnitt der Eingriffsnut eingreift, wobei die geringste Breite der Nut im Bereich zwischen Nutöffnung und Hinterschneidung derart auf die größte Breite des Abschnittes des Eingriffsvorsprungs abgestimmt ist, dass durch Einsetzen des Eingriffsvorsprunges in die Eingriffsnut der Eingriffsvorsprung und/oder die Eingriffsnut plastisch verformt werden. Insbesondere weist der Abschnitt des Eingriffsvorsprunges eine entsprechend größere Breite als die geringste Nutbreite auf. Der Abschnitt des Eingriffsvorsprunges mit der größten Breite passiert beim Zusammensetzen von Eingriffsvorsprung und Eingriffsnut den Bereich der kleinsten Breite der Eingriffsnut vor der Hinterschneidung. Dabei wird aufgrund der Breitendifferenz eine Druckkraft zwischen Eingriffsnut und Eingriffsvorsprung erzeugt. Diese wiederum führt zu Spannungen im Kontaktbereich zwischen Eingriffsnut und Eingriffsvorsprung. Der Bereich der kleinsten Nutbreite und der Bereich des Eingriffsvorsprungs mit der größten Breite sind dabei so dimensioniert, dass die auftretenden Spannungen die Fließgrenze des Materials übersteigen, sodass es zu einer plastischen Verformung des Materials kommt. Dabei kann der Abschnitt der Nut mit der geringsten Breite so eng und der Bereich des Eingriffsvorsprungs mit der größten Breite so breit gewählt werden, dass beim Zusammensetzen immer so hohe Spannungen sichergestellt sind, dass die Fließgrenze sicher überschritten wird. Um dies sicherzustellen sind gewisse Mindestdifferenzen im Maß von kleinster Nutbreite und größter Breite des Eingriffsvorsprunges einzuhalten. Es ist jedoch nicht erforderlich, derart genaue Toleranzen einzuhalten, wie sie für rein kraftschlüssige Passungen bzw. rein elastische Verbindungen erforderlich sind. Auf diese Weise können zum Beispiel Einflüsse des Werkzeugverschleißes beim Stanzen der Blechpakete minimiert werden.

Ferner kann die geringste Breite der Nut im Bereich zwischen Nutöffnung und Hinterschneidung derart auf die größte Breite eines verbreiterten Abschnittes des Eingriffsvorsprunges abgestimmt sein, dass beim Einsetzen des Eingriffsvorsprunges in die Eingriffsnut zusätzlich zu der plastischen Verformung eine elastisch Verformung der Eingriffsnut auftritt. Diese elastische Verformung bewirkt, dass sich die Nut beim Einsetzen des Eingriffsvorsprunges zunächst aufweitet und dann, wenn der verbreitete Abschnitt des Eingriffsvorsprunges den Abschnitt der geringsten Breite der Nut, das heißt die Hinterschneidung passiert hat, wieder elastisch zusammenzieht, sodass der Eingriffsvorsprung mit seinem verbreiterten Abschnitt die Hinterschneidung der Nut hintergreift. Zusätzlich kommt es erfindungsgemäß zu der bereits beschriebenen plastischen Verformung der Eingriffsnut und/oder des Eingriffsvorsprunges. Die plastische Verformung bewirkt, dass Eingriffsnut und/oder Eingriffsvorsprung beim Fügen zunächst plastisch auf das für die elastische Verformung erforderliche Übermaß verformt werden. D. h. das Übermaß bzw. die Breitendifferenz zwischen Eingriffsvorsprung und Eingriffsnut ist erfindungsgemäß größer gewählt als für das Einrasten bzw. Einschnappen unter elastischer Verformung erforderlich. Durch die plastische Verformung wird das Übermaß auf das für den elastischen Eingriff erforderliche Maß reduziert. Auf diese Weise kann trotz großer Toleranzbereiche stets eine sichere Rastverbindung zwischen Eingriffsnut und Eingriffsvorsprung sichergestellt werden. Beim Ineinanderfügen kalibrieren sich die Teile durch plastische Verformung selbsttätig auf das gewünschte Maß. So kann das relative Übermaß zwischen dem breitesten Teil des Eingriffsvorsprungs und der engsten Stelle der Eingriffsnut sehr groß toleriert werden, beispielsweise im Bereich von 1/100 bis 10/100 mm liegen.

Besonders bevorzugt erstreckt sich die Eingriffsnut mit vorzugsweise konstantem Querschnitt über die gesamte axiale Länge des Segmentes des Blechpaketes. Auf diese Weise kann eine sichere Verbindung des Segmentes mit einem angrenzenden Segment über die gesamte Länge der Segmente erreicht werden. Im Falle dass die Segmente Statorsegmente sind, erstreckt sich die Eingriffsnut vorzugsweise parallel zur Längsachse des Stators entlang einer Seiten- bzw. Stirnkante des Statorsegmentes.

Weiter bevorzugt erstreckt sich der Eingriffsvorsprung mit vorzugsweise konstantem Querschnitt über die gesamte axiale Länge des Segmentes. Damit kann sichergestellt werden, dass das Segment über die gesamte Länge mit einem angrenzenden Segment in Eingriff ist und so eine feste Verbindung herstellt. Wenn das Segment ein Statorsegment eines Stators bildet, erstreckt sich der Eingriffsvorsprung vorzugsweise an einer Stirnseite bzw. Stirnkante des Statorsegmentes parallel zur Statorlängsachse.

Der Eingriffsvorsprung weist besonders bevorzugt einen runden, vorzugsweise kreisförmigen Querschnitt auf, von dem aus sich ein Steg zu der Seitenkante des Segmentes erstreckt. Durch den runden Querschnitt des Vorsprunges wird erreicht, dass der Eingriffsvorsprung nur mit zwei kleinen diametral entgegengesetzten Umfangsabschnitten mit den Wandungen der Eingriffsnut in Kontakt kommt. Es kommt somit vorzugsweise im Wesentlichen nur zu einem Linienkontakt, wodurch sich beim Einsetzen des Eingriffsvorsprungs in die Eingriffsnut die in diesem Bereich auftretenden Spannungen so erhöhen, dass die Fließgrenze des Materials überschritten wird und das Material des Eingriffsvorsprunges hinter die Hinterschneidung der Eingriffsnut gedrückt wird bzw. fließen kann. Anstelle des kreisförmigen Querschnitts kann auch ein ovaler oder anders geformter Querschnitt mit kleinen Kontaktflächen zum Einsatz kommen. Durch den schmalen Kontaktbereich, vorzugsweise in Form eines Linienkontaktes zwischen Eingriffsnut und Eingriffsvorsprung, kann eine ausreichend große Kraft zur Überwindung der Fließgrenze in einem breiten Toleranzbereich des relativen Übermaßes zwischen Eingriffsnut und Eingriffsvorsprung, z. B. im Bereich von 1/100 bis 10/100 mm, sichergestellt werden. Gleichzeitig werden in dem kleinen bzw. schmalen Kontaktbereich auch bei geringen Fügekräften ausreichend große Flächenpressungen zur Überwindung der Fließgrenze erreicht. Die geringen Fügekräfte haben den Vorteil, dass eine Beschädigung der zu fügenden Segmente und insbesondere ein Auftrennen der einzelnen Bleche vermieden wird.

Vorzugsweise erweitert sich der Steg ausgehend von dem runden Querschnitt zu der Seitenkante des Segmentes. Auf diese Weise wird der Steg im Grenzbereich zu dem Segment verstärkt, sodass eine unerwünschte Verformung des Steges in diesem Bereich vermieden werden kann.

Entsprechend erweitert sich die Eingriffsnut vorzugsweise ausgehend von Ihrem Bereich mit der geringsten Breite zur Nutöffnung hin. Auf diese Weise wird das Einsetzen des Eingriffsvorsprunges erleichtert und sichergestellt, dass es beim Einsetzen des Eingriffsvorsprunges nicht zu einer unerwünschten plastischen Verformung in diesem Bereich der Eingriffsnut kommen kann.

Zweckmäßigerweise weist die Eingriffsnut eine derart größere Querschnittsfläche als der Eingriffsvorsprung auf, dass Freiräume zur Aufnahme des plastisch verformten Materials ausgebildet sind. Auf diese Weise wird sichergestellt, dass Eingriffsvorsprung und Eingriffsnut sicher unter plastischer Verformung so weit zusammen gefügt werden können, dass das verformte Material in den erweiterten Bereich, das heißt hinter die Hinterschneidung der Eingriffsnut eintritt. Durch entsprechend große Ausbildung der Freiräume kann sichergestellt werden, dass die zwei zu verbindenden Segmente des Blechpaketes immer an definierten Anlageflächen aneinander anliegen und zueinander positioniert werden.

Dabei ist insbesondere bevorzugt, dass die einzelnen Segmente jeweils mit ihren Seitenkanten aneinander zur Anlage kommen. Dadurch wird eine definierte Positionierung der Segmente relativ zueinander sichergestellt. Insbesondere bei einem Stator wird so sichergestellt, das die Statorsegmente im Bereich ihrer Seitenkanten definiert aneinander anliegen und in Umfangsrichtung nicht undefiniert im Verformungsbereich von Eingriffsvorsprung und Eingriffsnut zur Anlage kommen. Auch dies wird vorzugsweise durch genügend große Freiräume zur Aufnahme des plastisch verformten Materials erreicht.

Gemäß einer speziellen Ausführungsform kann in der Eingriffsnut im Bereich des Nutbodens ein Verformungselement angeordnet sein, welches den eingreifenden Eingriffsvorsprung derart verformt, dass er in den erweiterten Abschnitt der Eingriffsnut eingreift und die Hinterschneidung um- bzw. hintergreift. Diese Anordnung bewirkt, dass die plastische Verformung des Eingriffsvorsprunges nach Passieren der Hinterschneidung, das heißt des Bereiches der Nut mit der geringsten Breite, durch das Verformungselement eingeleitet oder verstärkt wird. Durch das Verformungselement wird der Eingriffsvorsprung an seinem in Einsetzrichtung vorderen Ende so verformt bzw. aufgeweitet, dass er die Hinterschneidung in der Eingriffsnut hintergreift. Die zusätzliche Aufweitung des Eingriffsvorsprungs durch das Verformungselement ermöglicht, eine größere Hinterschneidung auszubilden, so dass eine festere Verbindung zwischen den aneinander angrenzenden Segmenten erreicht werden kann. Zusätzlich können Eingriffsvorsprung und Eingriffsnut auch so dimensioniert sein, dass es bereits beim Passieren des Abschnittes mit der geringsten Nutbreite durch den Eingriffsvorsprung zu einer plastischen Verformung von Eingriffsvorsprung und/oder Eingriffsnut kommt. Das Verformungselement kann beispielsweise als Keil ausgebildet sein, welcher sich vom Nutboden in Einschubrichtung zur Nutöffnung erstreckt und in dieser Richtung verjüngt.

Die Segmente bestehen bevorzugt aus einer Vielzahl von Blechen, wobei in jedem Segment zumindest ein Blech mit einem Eingriffsvorsprung, welcher mit einer Eingriffsnut eines angrenzenden Segmentes unter plastischer Verformung im Eingriff ist, und zumindest ein Blech mit einer Eingriffsnut, welches mit einem Eingriffsvorsprung eines angrenzenden Segmentes unter plastischer Verformung im Eingriff ist, ausgebildet sind. Dies bedeutet, dass in dem Segment bzw. Blechpaket nicht jedes Blech so ausgebildet sein muss, dass es Eingriffsvorsprung und/oder Eingriffsnut aufweist, welche mit einer korrespondierenden Eingriffsnut bzw. einem korrespondierenden Eingriffsvorsprung eines angrenzenden Segmentes in der vorangehend beschriebenen Weise unter plastischer Verformung in Eingriff sind. Es ist ausreichend, dass einzelne Bleche der Segmente bzw. Blechpakete so dimensioniert sind, dass immer zumindest ein Blech des Segmentes erfindungsgemäß mit einem Blech eines angrenzenden Segmentes über Eingriffsnut und Eingriffsvorsprung unter plastischer Verformung in Eingriff ist.

Die Erfindung betrifft ferner ein Verfahren zur Herstellung eines Blechpaketes gemäß der vorangehenden Beschreibung. Das Blechpaket ist aus mindestens zwei Segmenten zu einem Bauteil zusammengesetzt. Von den beiden Segmenten weist zumindest eines an einer Seitenkante eine Eingriffsnut und das andere an einer der Seitenkante des ersten Segmentes gegenüberliegenden Seitenkante einen korrespondierenden Eingriffsvorsprung auf. Um das Blechpaket zusammenzusetzen, werden die Segmente so aneinander gefügt, dass der Eingriffsvorsprung des ersten Segmentes in die Eingriffsnut des anderen angrenzenden Segmentes eingreift. Auf diese Weise wird eine formschlüssige Verbindung zwischen den beiden Segmenten hergestellt.

Erfindungsgemäß wird die Eingriffsnut mit einer Hinterschneidung in Form eines von der Nutöffnung beabstandeten erweiterten Abschnittes ausgebildet. Das heißt die Nut wird beabstandet vom Nutgrund bzw. Nutboden eingeschnürt bzw. verengt ausgebildet. Ferner werden der Eingriffsvorsprung und die Eingriffsnut derart in ihren Dimensionen aufeinander abgestimmt, dass es beim Einsetzen des Eingriffsvorsprunges in die Eingriffsnut zu einer plastischen Verformung des Eingriffsvorsprunges und/oder der Eingriffsnut kommt. Durch diese plastische Verformung wird erreicht, dass der Eingriffsvorsprung im Zusammengesetzten Zustand der beiden Segmente in den erweiterten Abschnitt der Eingriffsnut eingreift und so die Hinterschneidung hintergreift und eine formschlüssige Verbindung herstellt. Die plastische Verformung des Eingriffsvorsprunges und/oder des die Eingriffsnut umgebenden Materials wird dadurch erreicht, dass Eingriffsnut und Eingriffsvorsprung so dimensioniert werden, dass es beim Zusammensetzen von Eingriffsnut und Eingriffsvorsprung zu so hohen Druckkräften zwischen Eingriffsnut und Eingriffsvorsprung kommt, dass die Spannungen im Inneren des Materials die Fließgrenze übersteigen, dass Material plastisch verformt wird und in den erweiterten Abschnitt der Eingriffsnut gedrückt wird, um die Hinterschneidung zu umgreifen. Zusätzlich kann Material, am Rande der Eingriffsnut in eine Einschnürung bzw. Ausnehmung am Eingriffsvorsprung gedrückt werden, sodass auch hier ein formschlüssiger Eingriff zwischen Eingriffsvorsprung und Eingriffsnut durch plastische Verformung erreicht wird.

Bevorzugt ist das Verfahren so ausgebildet, dass der Eingriffsvorsprung einen Abschnitt aufweist, welcher in den erweiterten Abschnitt der Eingriffsnut eingreift, wobei die geringste Breite der Nut im Bereich zwischen Nutöffnung und Hinterschneidung derart auf die größte Breite des Abschnittes des Eingriffsvorsprunges abgestimmt ist, dass sich beim Einsetzen des Eingriffsvorsprunges in die Eingriffsnut der Eingriffsvorsprung und/oder die Eingriffsnut plastisch verformen. Der Abschnitt des Eingriffsvorsprungs wird so dimensioniert, dass er eine größere Breite als die kleinste Breite der Eingriffsnut aufweist. So kommt es zwischen diesem Abschnitt, wenn dieser den Bereich der Nut mit der geringsten Breite passiert, zu den erforderlichen hohen Druckkräften bzw. Flächenpressungen.

Besonders bevorzugt kommt es beim Einsetzen des Eingriffsvorsprunges in die Eingriffsnut zusätzlich zu der plastischen Verformung zu einer elastischen Verformung der Eingriffsnut. Dies bedeutet, dass die Eingriffsnut beim Einsetzen des Eingriffsvorsprunges aufgeweitet wird, wobei durch elastische Rückstellkräfte eine auf den Eingriffsvorsprung wirkende Klemmkraft erzeugt wird. Besonders bevorzugt wird die Eingriffsnut dann aufgeweitet, wenn der breiteste Abschnitt des Eingriffsvorsprunges die engste Stelle der Eingriffsnut vor der Hinterschneidung passiert. Wenn der erweiterte Abschnitt des Eingriffsvorsprunges dann in den erweiterten Abschnitt der Eingriffsnut hinter der Hinterschneidung eintritt, bewegen sich die Wandungen der Eingriffsnut aufgrund elastischer Rückstellkräfte wieder in ihre Ausgangslage zurück, sodass der Abschnitt mit der geringsten Breite der Nut den erweiterten Abschnitt des Eingriffsvorsprunges umgreift. Auf diese Weise wird eine Rastverbindung zwischen Eingriffsvorsprung und Eingriffsnut geschaffen.

Nachfolgend wird die Erfindung beispielhaft anhand der beigefügten Zeichnungen beschrieben. In diesen zeigt:
- Fig. 1: eine perspektivische Ansicht eine Stators für einen Elektromotor gemäß der vorliegenden Erfindung,
- Fig. 2: eine perspektivische Ansicht eines Statorsegmentes des in Fig. 1 gezeigten Stators,
- Fig. 3: eine Detailansicht eines Eingriffsvorsprunges in einer Draufsicht,
- Fig. 4: eine Detailansicht einer Eingriffsnut in einer Draufsicht,
- Fig. 5: eine Ansicht des Eingriffsvorsprungs gemäß Fig. 3 und der Eingriffsnut gemäß Fig. 4 im verbundenen Zustand,
- Fig. 6: eine Detailansicht von Eingriffsvorsprung und Eingriffsnut gemäß einer zweiten Ausführungsform der Erfindung im nicht vollständig verbunden Zustand,
- Fig. 7: einen Ansicht von Eingriffsvorsprung und Eingriffsnut gemäß Fig. 6 im vollständig verbundenen Zustand,
- Fig. 8: eine perspektivische Ansicht einer Kette von miteinander verbundenen Statorsegmenten gemäß einer besonderen Ausführungsform der Erfindung und
- Fig. 9: eine perspektivische Ansicht einer Kette von Statorsegmenten gemäß einer weiteren Ausführungsform der Erfindung.

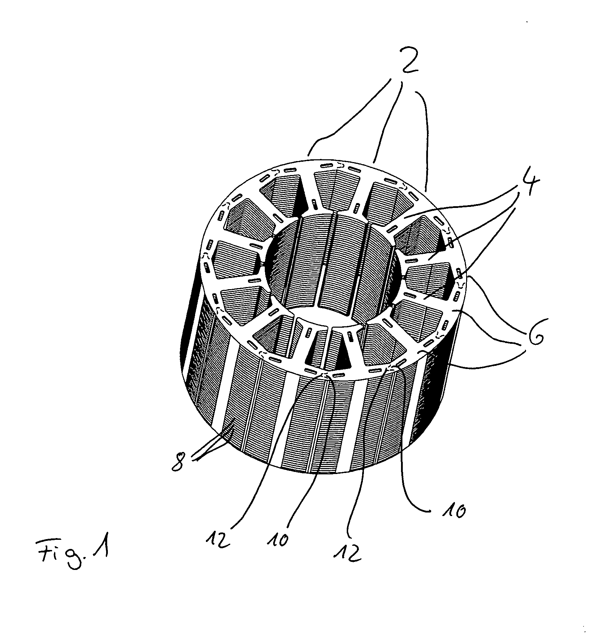

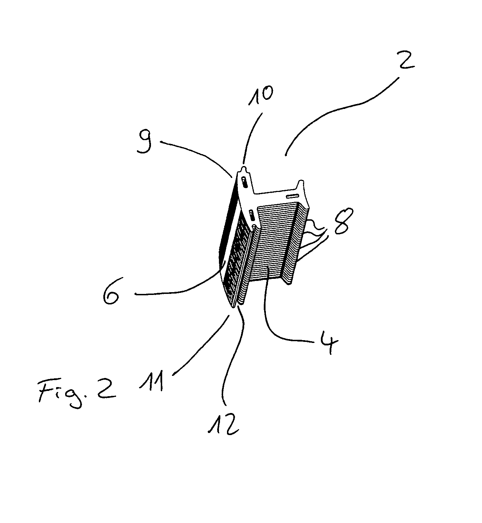

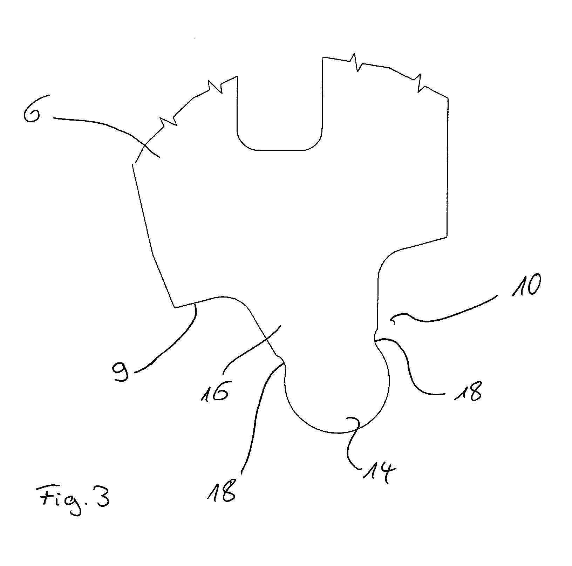

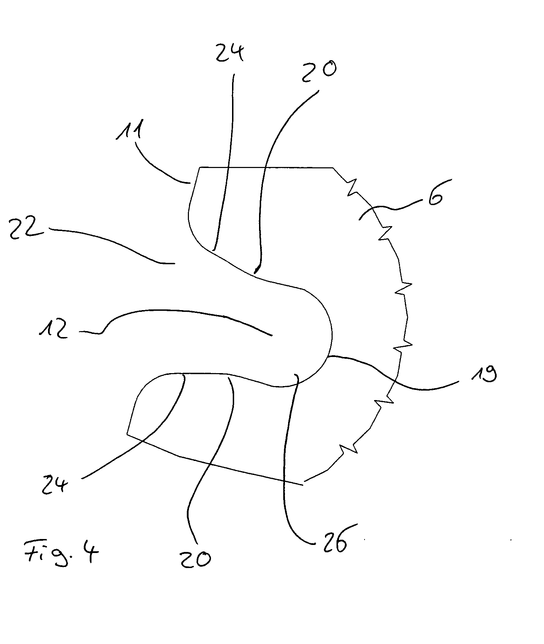

Fig. 1 zeigt in einer perspektivischen Ansicht ein Blechpaket gemäß der vorliegenden Erfindung in Form eines Stators für einen Elektromotor. Ein solcher Stator wird beispielsweise in einem Elektromotor zum Antrieb einer Heizungsumwälzpumpe eingesetzt. Der Stator besteht aus zwölf Statorsegmenten 2. Die Statorsegmente 2 sind in bekannter Weise T-förmig ausgebildet mit radial nach innen gerichteten Polschenkeln 4. Um die Polschenkel 4 herum werden die Statorwicklungen (hier nicht gezeigt) angeordnet bzw. gewickelt. Quer zu den Polschenkeln 4 erstrecken sich an der radialen Außenseite der Statorsegmente 2 in Umfangsrichtung Polringabschnitte 6. Die gesamten Statorsegmente sind als Blechpaket aus einer Vielzahl von identischen aufeinander gestapelten Blechen 8 ausgebildet.

Wie gezeigt, sind die zwölf einzelnen Statorsegmente 2 zu einem Statorring zusammengefügt, wobei die einzelnen Statorsegmente 2 im Bereich ihrer Polringabschnitte 6 miteinander verbunden sind, sodass ein geschlossener Polring am Außenumfang des Stators gebildet wird. Dazu sind an jedem Statorsegment an in Umfangsrichtung entgegengesetzten Seiten bzw. Stirnkanten 9, 11 der Polringabschnitte 6 Eingriffsvorsprünge 10 und Eingriffsnuten 12 ausgebildet, wobei an jedem Statorsegment 2 an einer Seitenkante 9 ein Eingriffsvorsprung 10 und an der entgegengesetzten Seitenkante 11 eine Eingriffsnut 12 ausgebildet ist.

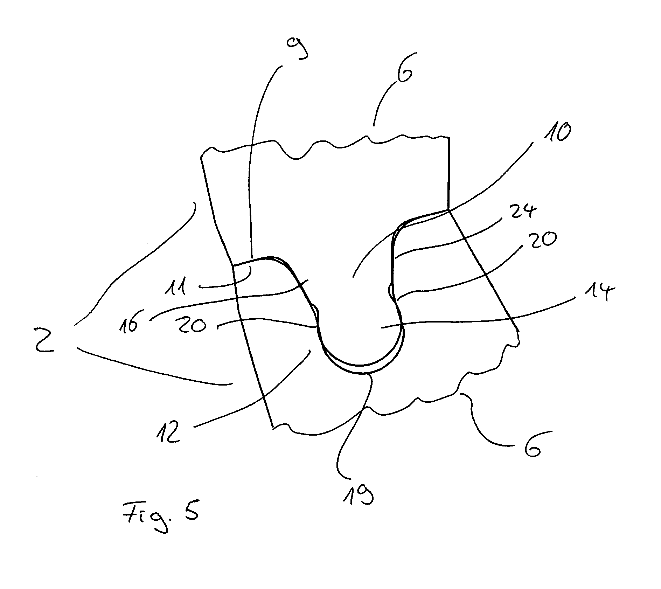

Dies ist deutlicher in Fig. 2 zu sehen, welche ein einzelnes Statorsegment des in Fig. 1 gezeigten Stators im Detail zeigt. Der Eingriffsvorsprung 10 und die Eingriffsnut 12 erstrecken sich jeweils über die gesamte Länge der zugehörigen Seitenkante des Polringabschnittes 6. Dabei weisen Eingriffsvorsprung 10 und Eingriffsnut 12 über die gesamte Länge einen konstanten Querschnitt auf. Der Eingriffsvorsprung 10 wird durch Vorsprünge und die Eingriffsnut 12 entsprechend durch Ausnehmungen an den einzelnen Blechen 8 gebildet. Ferner erstrecken sich Eingriffsnut 12 und Eingriffsvorsprung 10 in Umfangsrichtung des Stators, sodass ein Zusammenfügen der Statorsegmente in dieser Richtung möglich ist.

Der Eingriff zwischen Eingriffsvorsprung 10 und Eingriffsnut 12 wird näher anhand der Fig. 3 bis 5 erläutert.

Fig. 3 zeigt eine schematische Draufsicht auf den Eingriffsvorsprung 10. Der Eingriffsvorsprung 10 erstreckt sich ausgehend von einer Seitenkante 9 des Polringabschnittes 6 eines Statorsegmentes 2. Dabei ist das vordere freie Ende des Eingriffsvorsprungs 10 im Querschnitt im Wesentlichen als kreisförmiger Abschnitt 14 ausgebildet. Der kreisförmige Abschnitt 14 ist mit der Seitenkante 9 über einen Steg 16 verbunden, welcher sich ausgehend von dem kreisförmigen Abschnitt 14 zu der Seitenkante 9 hin erweitert. Die Anbindung des Stegs 16 an den kreisförmigen Abschnitt 14 erfolgt im Bereich einer vom Durchmesser des kreisförmigen Abschnittes 14 beabstandeten Kreissehne, sodass zwischen Steg 16 und kreisförmigen Abschnitt 14 Einschnürungen bzw. Einbuchtungen 18 ausgebildet sind.

Fig. 4 zeigt eine entsprechende Detailansicht der Eingriffsnut 12 an der entgegengesetzten Seitenkante 11 des Polringabschnittes 6. Im Bereich des Nutbodens 19 weist die Eingriffsnut 12 im Querschnitt eine kreisförmige Kontur auf, welche im Wesentlichen auf die kreisförmige Kontur des kreisförmigen Abschnittes 14 an dem Eingriffsvorsprung 10 abgestimmt ist. Beabstandet vom Nutboden 19 weist die Eingriffsnut 12 an ihren Seitenwandungen gegenüberliegende Vorsprünge 20 auf, welche eine Verengung bzw. Hinterschneidung bilden. Ausgehend von den Vorsprüngen 20 erweitert die Eingriffsnut 12 sich zur Nutöffnung 22 hin. Die sich erweiternden, der Nutöffnung 22 zugewandten Abschnitte 24 der Nutwandung definieren im Querschnitt eine Form, welche mit der Querschnittsform des Steges 16 korrespondiert.

Fig. 5 zeigt im Querschnitt den zusammengesetzten Zustand des Eingriffsvorsprunges 10 gemäß Fig. 3 und der Eingriffsnut 12 gemäß Fig. 4. Beim Einsetzen des Eingriffsvorsprunges 10 in die Eingriffsnut 12 muss zunächst der kreisförmige Abschnitt 14 mit seiner in Durchmesserrichtung gelegenen größten Breite die durch die Vorsprünge 20 gebildete Verengung bzw. Hinterschneidung in der Eingriffsnut 12 passieren. Dabei ist der Durchmesser des kreisförmigen Abschnittes 14 derart größer als der Abstand zwischen den Vorsprüngen 20, dass es zwischen den Vorsprüngen 20 und den diametral entgegengesetzten Außenseiten des kreisförmigen Abschnittes 14 zu derart hohen Druckbelastungen kommt, dass das Material im Bereich des kreisförmigen Abschnittes 14 des Eingriffsvorsprunges 10 plastisch verformt wird und in den in Einschubrichtung hinter den Vorsprüngen 20 gelegenen, das heißt dem Nutboden 19 zugewandten erweiterten Bereich 26 (siehe Fig. 4) der Eingriffsnut 12 fließt. Auf diese Weise werden die Vorsprünge 20 von dem Eingriffsvorsprung 10 und insbesondere dessen kreisförmigen Abschnitt 14 hintergriffen. Zusätzlich kommt es zu einer elastischen Verformung, bei welcher sich beim Einsetzen die Eingriffsnut 12 aufweitet und dann, wenn der kreisförmige Abschnitt 14 des Eingriffsvorsprunges 10 die Vorsprünge 20 in der Eingriffsnut 12 passiert hat, aufgrund der elastischen Rückstellkräfte wieder verengt, sodass die Vorsprünge 20 im Bereich der Einbuchtungen 18 mit dem Eingriffsvorsprung 10 in Eingriff treten. So wird eine feste formschlüssige Verbindung in Art einer Rastverbindung zwischen Eingriffsvorsprung 10 und Eingriffsnut 12 gebildet.

Die Eingriffsnut 12 und der Eingriffsvorsprung 10 sind so dimensioniert, dass im zusammengesetzten Zustand sowohl im Bereich der Einbuchtungen 18 als auch zwischen dem kreisförmigen Abschnitt 14 und dem Nutboden 19 Freiräume verbleiben. Auf diese Weise ist genügend Raum zur Aufnahme des plastisch verformten Materials vorhanden. Dadurch wird sichergestellt, dass die aneinander angrenzenden Statorsegmente 12 stets mit Ihren Seitenkanten 9 und 11 definiert zur Anlage kommen. Ferner treten die Abschnitte 24 der Nutwandung mit den Seitenwandungen des Stegs 16 des Eingriffsvorsprunges 10 in Anlage. In diesem Bereich kann stets eine definierte Anlage geschaffen werden, welche eine geometrisch vorgegebene Positionierung der einzelnen Statorsegmente 2 zueinander ermöglicht. Durch die Freiräume im Bereich der Einbuchtungen 18 sowie des Nutbodens 19 wird sichergestellt, dass die Positionierung in Umfangsrichtung nicht in dem Verformungsbereich zwischen Eingriffsvorsprung 10 und Eingriffsnut 12 erfolgt.

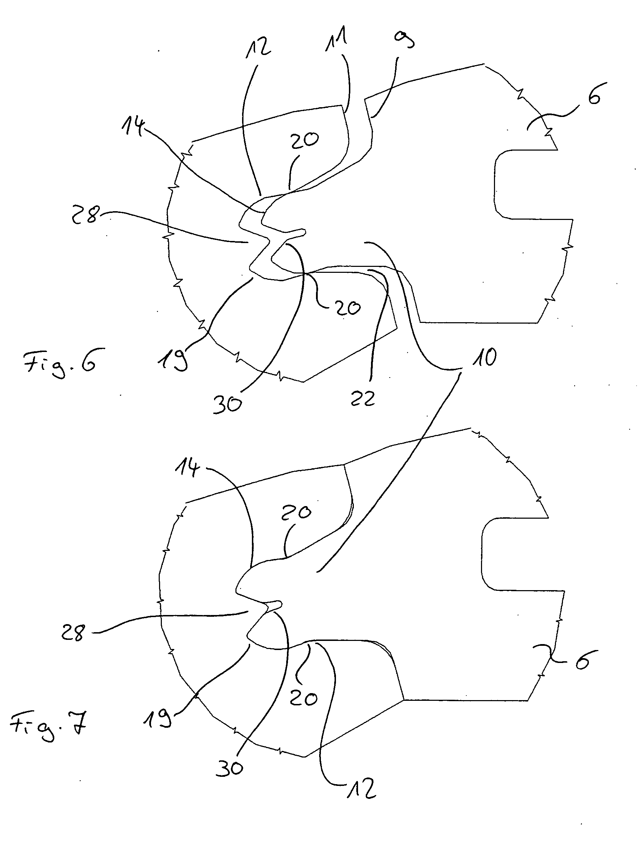

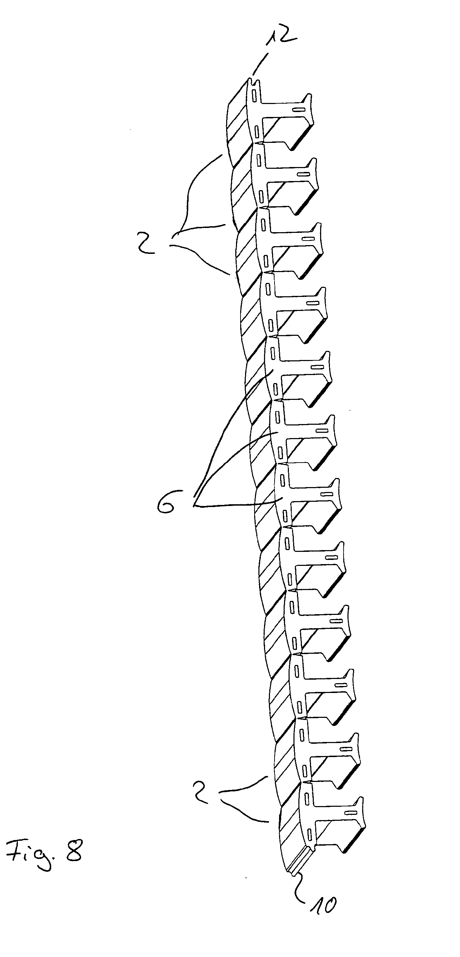

Fig. 6 und 7 zeigen den Eingriffsvorsprung 10 und die Eingriffsnut 12 gemäß einer zweiten Ausführungsform der Erfindung. Fig. 6 zeigt eine Ansicht, im noch nicht vollständig zusammengesetzten Zustand und Fig. 7 zeigt den vollständig zusammengesetzten Zustand von Eingriffsvorsprung 10 und Eingriffsnut 12. Eingriffsvorsprung 10 und Eingriffsnut 12 gemäß Fig. 6 und 7 weisen alle anhand der Figuren 3 bis 5 erläuterten Merkmale auf, sodass auf eine Wiederholung dieser Merkmale verzichtet wird. Zusätzlich ist gemäß Fig. 6 und 7 am Nutboden 19 ein Keil 28 ausgebildet, welcher sich ausgehend von dem Nutboden 19 zu der Nutöffnung 22 erstreckt und sich in dieser Richtung keilförmig verjüngt. Dem Keil 28 gegenüberliegend ist an der Stirnseite des Eingriffsvorsprunges 10, das heißt im Bereich des kreisförmigen Abschnittes 14, eine nach innen gerichtete keilförmige Aussparung 30 ausgebildet. An der Spitze der keilförmigen Aussparung 30 ist diese zudem in Längsrichtung des Eingriffsvorsprunges 10 nutförmig verlängert.

Die Anordnung des Keils 28 und der Aussparung 30 bewirken, dass, wenn der Eingriffsvorsprung 10 in die Eingriffsnut 12 eingesetzt wird, der Keil 28 in die Aussparung 30 eingreift, wie in Fig. 7 gezeigt. Der Keil 28 ist so dimensioniert, dass er eine größere Breite bzw. größere Querschnittsfläche aufweist als die Aussparung 30. Dies bewirkt, dass der Keil 28 durch Eingriff in die Aussparung 30 den Eingriffsvorsprung 10 aufweitet, sodass die durch die Aussparung 30 getrennten Teile des kreisförmigen Abschnittes 14 in radialer Richtung, quer zur Einschubrichtung des Eingriffsvorsprunges 10 auseinandergedrückt und vorzugsweise plastisch verformt werden. Dies bewirkt, dass die Vorsprünge 20 in der Eingriffsnut 12 von dem kreisförmigen Abschnitt 14 des Eingriffsvorsprunges 10 noch stärker hintergriffen werden. Die Klemmkraft des kreisförmigen Abschnittes 14 in der Eingriffsnut 12 hinter den Vorsprüngen 20 wird weiter erhöht, sodass eine feste mechanische Verbindung von Eingriffsvorsprung und Eingriffsnut erreicht wird.

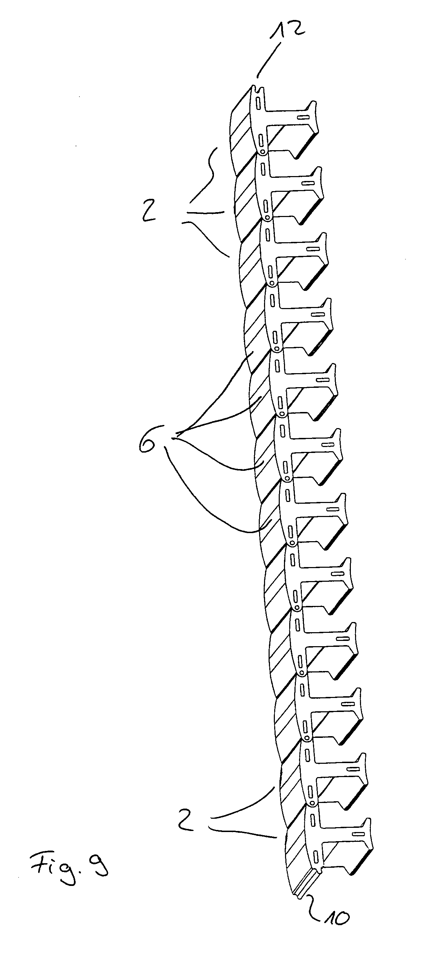

Fig. 8 zeigt eine Kette von Statorsegmenten 2 zur Ausbildung eines ringförmigen Stators ähnlich dem in Fig. 1 gezeigten Stators. Im Unterschied zu dem in Fig. 1 gezeigten Stator sind die zwölf Statorsegmente 2 gemäß der Ausführungsform in Fig. 8 bereits in vorgefertigter Weise zu einer Kette gelenkig miteinander verbunden. Die kann beispielsweise durch schmale biegsame Stege zwischen den Blechen 8 der einzelnen Statorsegmente 2 erfolgen. Vorteilhaft sind dazu die Bleche 8 sämtlicher zwölf Statorsegmente 2 jeweils einstückig gestanzt. Nur die beiden am Ende der Kette gelegenen Statorsegmente 2 weisen einen Eingriffsvorsprung 10 bzw. eine Eingriffsnut 12 gemäß der vorangehend beschriebenen Ausgestaltung auf, wobei die Eingriffsnut 12 an einem Ende der Kette und der Eingriffsvorsprung 10 am entgegengesetzten Ende der Kette ausgebildet sind. Zum Zusammenfügen des Stators werden die Statorsegmente 2 um die gelenkigen Verbindungen zwischen den Statorsegmenten 2 so gebogen, dass die Statorsegmente 2 mit ihren Seitenkanten im Bereich der Polringabschnitte 6 aneinander zur Anlage kommen. Ferner greift der Eingriffsvorsprung 10 an dem einen Ende der Kette in die Eingriffsnut 12 am anderen Ende der Kette in der vorangehend beschriebenen Weise, sodass ein geschlossener Statorring gebildet wird.

Fig. 9 zeigt eine weitere Ausführungsform der in Fig. 8 gezeigten vorgefertigten Kette von Statorsegmenten 2. Im Unterschied zu der Ausführungsform gemäß Fig. 8 sind die einzelnen Statorsegmente 2 gemäß Fig. 9 als separate Bauteile ausgebildet und durch Gelenkverbindungen im Bereich der Polringabschnitte 6 miteinander verbunden. Das Zusammenfügen zu einem ringförmigen Stator erfolgt in der vorangehend beschriebenen Weise durch Eingriff des Eingriffsvorsprunges 10 in die Eingriffsnut 12 am entgegengesetzten Ende der Kette.

### Bezugszeichenliste

- 2: Statorsegmente
- 4: Polschenkel
- 6: Polringabschnitte
- 8: Bleche
- 9: Seitenkante
- 10: Eingriffsvorsprung
- 11: Seitenkante
- 12: Eingriffsnut
- 14: kreisförmiger Abschnitt
- 16: Steg
- 18: Einbuchtungen
- 19: Nutboden
- 20: Vorsprünge
- 22: Nutöffnung
- 24: Abschnitte der Nutwandung
- 26: erweiterter Abschnitt der Eingriffsnut
- 28: Keil
- 30: Aussparung

## Patentansprüche

1. Blechpaket für elektromagnetische Anwendungen mit zumindest zwei Segmenten (2), von denen zumindest eines an einer Seitenkante (11) eine Eingriffsnut (12) und das andere an einer gegenüberliegenden Seitenkante (9) einen korrespondierenden Eingriffsvorsprung (10) aufweist, über welche die beiden Segmente (2) zu einem Bauteil miteinander verbunden sind, **dadurch gekennzeichnet, dass**
die Eingriffsnut (12) eine Hinterschneidung in Form eines von der Nutöffnung beabstandeten erweiterten Abschnittes (26) aufweist und der Eingriffsvorsprung (10) und die Eingriffsnut (12) derart aufeinander abgestimmt dimensioniert sind, dass durch Einsetzen des Eingriffsvorsprunges (10) in die Eingriffsnut (12) der Eingriffsvorsprung (10) und/oder die Eingriffsnut (12) plastisch verformt werden, so dass der Eingriffsvorsprung (10) in den erweiterten Abschnitt (26) der Eingriffsnut (12) eingreift.

2. Blechpaket nach Anspruch 1, **dadurch gekennzeichnet, dass** dieses als Stator für einen Elektromotor, vorzugsweise für ein Pumpenaggregat, ausgebildet ist, wobei der Stator zumindest zwei Statorsegmente (2) aufweist, von denen eines an einer Seitenkante (11) die Eingriffsnut (12) und das andere an einer gegenüberliegenden Seitenkante (9) den korrespondierenden Eingriffsvorsprung (10) aufweist.

3. Bleckpaket nach Anspruch 1 oder 2, **dadurch gekennzeichnet, dass** der Eingriffsvorsprung (10) einen Abschnitt (14) aufweist, welcher in den erweiterten Abschnitt (26) der Eingriffsnut (12) eingreift, wobei die geringste Breite der Nut im Bereich zwischen Nutöffnung (22) und Hinterschneidung derart auf die größte Breite des Abschnittes (14) des Eingriffsvorsprunges (10) abgestimmt ist, dass durch Einsetzen des Eingriffsvorsprunges (10) in die Eingriffsnut (12) der Eingriffsvorsprung (10) und/oder die Eingriffsnut (12) plastisch verformt werden.

4. Blechpaket nach einem der vorangehenden Ansprüche, **dadurch gekennzeichnet, dass** die geringste Breite der Nut im Bereich zwischen Nutöffnung (22) und Hinterschneidung derart auf die größte Breite eines verbreiterten Abschnittes (14) des Eingriffsvorsprunges (10) abgestimmt ist, dass beim Einsetzen des Eingriffsvorsprunges (10) in die Eingriffsnut (12) zusätzlich zu der plastischen Verformung eine elastische Verformung der Eingriffsnut (12) auftritt.

5. Blechpaket nach einem der vorangehenden Ansprüche, **dadurch gekennzeichnet, dass** sich die Eingriffsnut (12) mit vorzugsweise konstantem Querschnitt über die gesamte axiale Länge des Segmentes (2) erstreckt.

6. Blechpaket nach einem der vorangehenden Ansprüche, **dadurch gekennzeichnet, dass** sich der Eingriffsvorsprung (10) mit vorzugsweise konstantem Querschnitt über die gesamte axiale Länge des Segmentes (2) erstreckt.

7. Blechpaket nach einem der vorangehenden Ansprüche, **dadurch gekennzeichnet, dass** der Eingriffsvorsprung (10) einen runden, vorzugsweise kreisförmigen Querschnitt (14) aufweist, von dem aus sich ein Steg (16) zu der Seitenkante (9) des Segmentes (2) erstreckt.

8. Blechpaket nach Anspruch 7, **dadurch gekennzeichnet, dass** der Steg (16) sich ausgehend von dem runden Querschnitt (14) zu der Seitenkante (9) des Segmentes (2) hin erweitert.

9. Blechpaket nach einem der vorangehenden Ansprüche, **dadurch gekennzeichnet, dass** die Eingriffsnut (12) sich ausgehend von ihrem Bereich mit der geringsten Breite zur Nutöffnung (22) hin erweitert.

10. Blechpaket nach einem der vorangehenden Ansprüche, **dadurch gekennzeichnet, dass** die Eingriffsnut (12) eine derart größere Querschnittsfläche als der Eingriffsvorsprung (10) aufweist, dass Freiräume zur Aufnahme des plastisch verformten Materials ausgebildet sind.

11. Blechpaket nach einem der vorangehenden Ansprüche, **dadurch gekennzeichnet, dass** die einzelnen Segmente (2) jeweils mit ihren Seitenkanten (9, 11) aneinander zur Anlage kommen.

12. Blechpaket nach einem der vorangehenden Ansprüche, **dadurch gekennzeichnet, dass** in der Eingriffsnut (12) im Bereich des Nutbodens (19) ein Verformungselement (28) angeordnet ist, welches den eingreifenden Eingriffsvorsprung (10) derart verformt, dass er in den erweiterten Abschnitt (26) der Eingriffsnut (12) eingreift und die Hinterschneidung umgreift.

13. Blechpaket nach einem der vorangehenden Ansprüche, **dadurch gekennzeichnet, dass** die Segmente (2) jeweils aus einer Vielzahl von Blechen (8) ausgebildet sind, wobei in jedem Segment (2) zumindest ein Blech (8) mit einem Eingriffsvorsprung (10), welcher mit einer Eingriffsnut (12) eines angrenzenden Segmentes (2) unter plastischer Verformung in Eingriff ist, und zumindest ein Blech (8) mit einer Eingriffsnut (12), welches mit einem Eingriffsvorsprung (10) eines angrenzenden Segmentes (2) unter plastischer Verformung in Eingriff ist, ausgebildet sind.

14. Verfahren zur Herstellung eines Blechpaketes nach einem der vorangehenden Ansprüche, bei welchem das Blechpaket aus zumindest zwei Segmenten (2), von denen zumindest eines an einer Seitenkante (11) eine Eingriffsnut (12) und das andere an einer gegenüberliegenden Seitenkante (9) einen korrespondierenden Eingriffsvorsprung (10) aufweisen, derart zu einem Bauteil zusammengesetzt wird, dass der Eingriffsvorsprung (10) des einen Segmentes (2) in die Eingriffsnut (12) des angrenzenden Segmentes (2) eingreift, **dadurch gekennzeichnet, dass**
die Eingriffsnut (12) eine Hinterschneidung in Form eines von der Nutöffnung beanstandeten erweiterten Abschnittes (26) aufweist, wobei und der Eingriffsvorsprung (10) und die Eingriffsnut (12) derart aufeinander abgestimmt dimensioniert sind, dass sich beim Einsetzen des Eingriffsvorsprunges (10) in die Eingriffsnut (12) der Eingriffsvorsprung (10) und/oder die Eingriffsnut (12) plastisch verformen, so dass der Eingriffsvorsprung (10) in den erweiterten Abschnitt (26) der Eingriffsnut (12) eingreift.

15. Verfahren nach Anspruch 14, **dadurch gekennzeichnet, dass** der Eingriffsvorsprung (10) einen Abschnitt (14) aufweist, welcher in den erweiterten Abschnitt (26) der Eingriffsnut (12) eingreift, wobei die geringste Breite der Eingriffsnut (12) im Bereich zwischen Nutöffnung (22) und Hinterschneidung derart auf die größte Breite des Abschnittes (14) des Eingriffsvorsprunges (10) abgestimmt ist, dass sich beim Einsetzen des Eingriffsvorsprunges (10) in die Eingriffsnut (12) der Eingriffsvorsprung (10) und/oder die Eingriffsnut (12) plastisch verformen.

16. Verfahren nach Anspruch 14 oder 15, **dadurch gekennzeichnet, dass** die Eingriffsnut (12) beim Einsetzen des Eingriffsvorsprunges (10) zusätzlich zu der plastischen Verformung elastisch verformt wird.
